(19)

**Europäisches Patentamt**
**European Patent Office**
**Office européen des brevets**

(11) **EP 4 765 433 A1**

(12) **EUROPEAN PATENT APPLICATION**

(43) Date of publication:
24.06.2026 Bulletin 2026/26

(21) Application number: 25223644.3

(22) Date of filing: 16.12.2025

(51) International Patent Classification (IPC):
*H01M 50/491* (2021.01)     *H01M 10/0525* (2010.01)
*H01M 50/417* (2021.01)     *H01M 50/426* (2021.01)
*H01M 50/434* (2021.01)     *H01M 50/446* (2021.01)
*H01M 50/454* (2021.01)     *H01M 50/489* (2021.01)

(52) Cooperative Patent Classification (CPC):
H01M 10/0525; H01M 50/417; H01M 50/42;
H01M 50/426; H01M 50/434; H01M 50/446;
H01M 50/454; H01M 50/457; H01M 50/489;
H01M 50/491

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.12.2024 KR 20240193094**

(71) Applicant: **SAMSUNG SDI CO., LTD.**
**Yongin-si, Gyeonggi-do 17084 (KR)**

(72) Inventors:
• **PARK, Changwon**
  **17084 Gyeonggi-do (KR)**
• **KIM, Gain**
  **17084 Gyeonggi-do (KR)**
• **GU, Jayeon**
  **17084 Gyeonggi-do (KR)**
• **SEO, Dongwan**
  **17084 Gyeonggi-do (KR)**

(74) Representative: **Michalski Hüttermann & Partner
mbB**
**Kaistraße 16A**
**40221 Düsseldorf (DE)**

(54) **SEPARATOR FOR RECHARGEABLE LITHIUM BATTERY AND RECHARGEABLE LITHIUM BATTERY INCLUDING THE SAME**

(57) Provided are a separator for a rechargeable lithium battery, and a rechargeable lithium battery including the separator. The separator for a rechargeable lithium battery includes a porous substrate and a coating layer on the porous substrate. The coating layer includes boron nitride (BN) and a binder, and an amount of the boron nitride based on total 100 wt% of the coating layer is less than about 70 wt%.

EP 4 765 433 A1

**Description**

**BACKGROUND**

**1. Field**

A separator for a rechargeable lithium battery, and a rechargeable lithium battery including the separator are disclosed.

**2. Description of the Related Art**

A rechargeable lithium battery may be recharged and has, e.g., three or more times as high an energy density per unit weight as a conventional lead storage battery, nickel-cadmium battery, nickel hydrogen battery, nickel zinc battery, and the like. A rechargeable lithium battery may be also charged at a high rate and thus, is commercially manufactured for, e.g., a laptop, a cell phone, an electric tool, an electric bike, and the like, and increasing energy density may be advantageous.
A rechargeable lithium battery is manufactured by injecting an electrolyte into an electrode assembly, which includes a positive electrode including a positive electrode active material capable of intercalating/deintercalating lithium ions, and a negative electrode including a negative electrode active material capable of intercalating/deintercalating lithium ions.
Between the positive electrode and the negative electrode, a separator is generally interposed, and the separator includes a ceramic layer coated on one surface or on both surfaces of a porous substrate.
The ceramic layer has advantages of compensating for insufficient heat resistance and mechanical strength of the polymer fabric panel, but has disadvantages of increasing a thickness of the separator and of the rechargeable lithium battery including the separator and inefficiently dissipating heat generated during operation of the rechargeable lithium battery.

**SUMMARY**

Some example embodiments include a separator for a rechargeable lithium battery that has desired or improved adhesive strength to an electrode while improving the mechanical strength and thermal stability of the separator.
Some example embodiments include a separator for a rechargeable lithium battery, the separator including a porous substrate and a coating layer on the porous substrate. The coating layer includes boron nitride (BN) and a binder, and an amount of the boron nitride based on total 100 wt% of the coating layer is less than about 70 wt%.
Some example embodiments include a rechargeable lithium battery including the separator of the example embodiments.
The separator according to some example embodiments may exhibit desired or improved adhesive strength to an electrode while improving the mechanical strength and thermal stability of the separator.
Accordingly, by using the separator of some example embodiments, heat generated during operation of a rechargeable lithium battery may be more efficiently dissipated even with a thin thickness, and the adhesive strength to the electrode may be maintained even during long-term charging and discharging of the rechargeable lithium battery.

**BRIEF DESCRIPTION OF THE DRAWINGS**

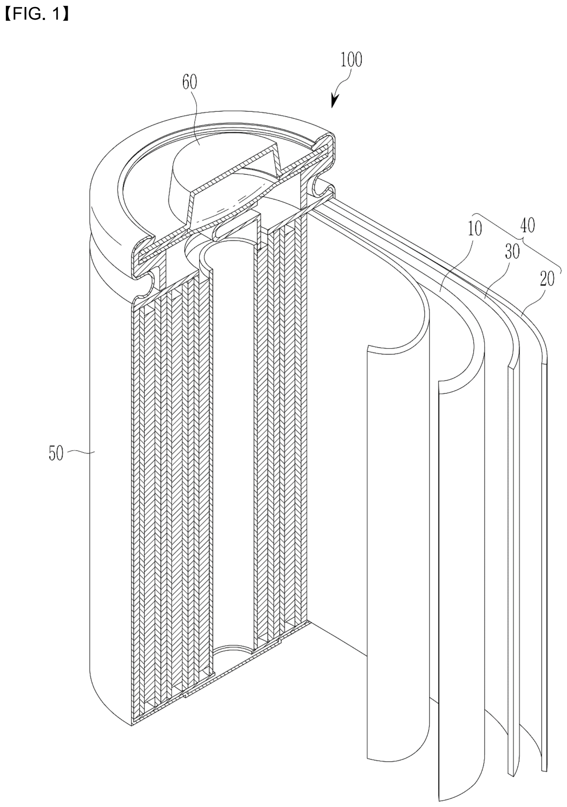

FIGS. 1 to 4 are schematic views illustrating rechargeable lithium batteries according to some example embodiments.

**DETAILED DESCRIPTION**

Hereinafter, example embodiments of the present disclosure are described in detail. However, these embodiments are examples, the present disclosure is not limited thereto, and the present disclosure is defined by the scope of claims.
As used herein, when a specific definition is not otherwise provided, it is understood that when an element such as a layer, film, region, or substrate is referred to as being "on" another element, the element can be directly on the other element or intervening elements may also be present.
As used herein, when specific definition is not otherwise provided, the singular may also include the plural. In addition, unless otherwise specified, "A or B" may mean "including A, including B, or including A and B."
As used herein, "combination thereof" may mean a mixture, a stack, a composite, a copolymer, an alloy, a blend, or a reaction product of constituents.

**Separator:**

Some example embodiments include a separator for a rechargeable lithium battery including a porous substrate and a coating layer on the porous substrate. The coating layer includes boron nitride (BN) and a binder, and an amount of the boron nitride based on a total 100 wt% of the coating layer is less than about 70 wt%.

(1) A separator of some example embodiments includes a coating layer including boron nitride instead of ceramic.

The boron nitride is a compound that exhibits desired or improved heat resistance, mechanical strength, heat dissipation, and insulation properties, and depending on the form thereof, specific functions can be relatively specialized.

Accordingly, the separator of some example embodiments having a coating layer including boron nitride may improve the mechanical strength of the separator while uniformly, or substantially uniformly, dissipating heat and distributing heat on the surface of the separator, compared to a conventional separator applying a coating layer including a ceramic.

(2) The separator of some example embodiments includes a coating layer including boron nitride in an amount of less than about 70 wt%.

When the amount of boron nitride in the coating layer is greater than or equal to about 70 wt%, an amount of the binder is relatively reduced, so that the adhesive strength to the electrode is not maintained and may fall off even during long-term charging and discharging of a rechargeable lithium battery.

Accordingly, a separator of some example embodiments applying a coating layer having a boron nitride amount of less than about 70 wt% may exhibit a desired or improved adhesive strength to an electrode compared to a conventional separator including a coating layer having a boron nitride amount that is greater than or equal to about 70 wt%, and further, may maintain adhesive strength to the electrode even during long-term charging and discharging of a rechargeable lithium battery.

Hereinafter, a separator according to some example embodiments is described in more detail.

Amount of Boron Nitride

An amount of the boron nitride based on total 100 wt% of the coating layer may be less than about 70 wt%, less than or equal to about 65 wt%, or less than or equal to about 60 wt%; and may be greater than or equal to about 50 wt%, or greater than or equal to about 55 wt%.

An example embodiment of a separator satisfying the above range can exhibit desired or improved adhesion to an electrode while exhibiting uniform, or substantially uniform, heat dissipation and heat distribution on the surface of the separator.

Forms of Boron Nitride

As mentioned above, the boron nitride may have different properties depending on the form thereof. For example, the boron nitride nanosheet (BNNS) form may be advantageous in terms of mechanical strength compared to the boron nitride nanotube (BNNT) form.

The boron nitride nanosheet may have a thickness in a range of $\geq 1$ nm to $\leq 100$ nm, $\geq 1$ nm to $\leq 50$ nm, or $\geq 1$ nm to $\leq 10$ nm; and each, or at least one of, horizontal and vertical length of $\geq 1$ nm to $\leq 1000$ nm, $\geq 1$ nm to $\leq 500$ nm, or $\geq 1$ nm to $\leq 100$ nm.

A thickness, horizontal length, and vertical length of the boron nitride nanosheet may be obtained by averaging the values visually observed in the scanning electron microscopy (SEM) image of the boron nitride nanosheet.

Binder

The binder may include a polyvinylidene fluoride-based polymer or a (meth)acrylic polymer. The (meth)acrylic polymer may include an acrylic polymer and a methacrylic polymer.

For example, polyvinylidene fluoride may constitute the binder, and the average molecular weight thereof, measured according to the gel permeation chromatography (GPC) method may be in a range of $\geq 300,000$ g/mol to $\leq 1,000,000$ g/mol.

Thickness of Coating Layer

A ratio of the thickness of the porous substrate to the thickness of the coating layer may be in a range of about 7:1 to about 6:1.

The coating layer may have a thickness in a range of $\geq 5\,\mu m$ to $\leq 20\,\mu m$, $\geq 10\,\mu m$ to $\leq 20\,\mu m$, or $\geq 10\,\mu m$ to $\leq 15\,\mu m$.

Even at such a thin thickness, the coating layer may in general exhibit improved functionality, compared with commonly known separators.

Porous Substrate

The porous substrate may be a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

Method of Forming Coating Layer

A method of forming the coating layer is not particularly limited, but may include electrospraying. When electrospraying is used, the coating layer may have a thinner thickness.

The electrospraying may be performed under common conditions known in the art.

**Rechargeable Lithium Battery:**

Some example embodiments include a rechargeable lithium battery, including a positive electrode, a negative electrode, and a separator between the positive electrode and the negative electrode, wherein the separator is or includes the separator of the aforementioned example embodiments.

Hereinafter, a rechargeable lithium battery of some example embodiments is described in detail, excluding duplicate descriptions.

Positive Electrode Active Material

The positive electrode active material may be or include a compound (lithiated intercalation compound) capable of intercalating and deintercalating lithium. For example, one or more types of composite oxides of lithium and a metal such as or including at least one of cobalt, manganese, nickel, and combinations thereof may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. $Li_aA_{1-b}X_bO_{2-c}D_c$ $(0.90 \leq a \leq 1.8,\ 0 \leq b \leq 0.5,\ 0 \leq c \leq 0.05)$; $Li_aMn_{2-b}X_bO_{4-c}D_c$ $(0.90 \leq a \leq 1.8,\ 0 \leq b \leq 0.5,\ 0 \leq c \leq 0.05)$; $Li_aNi_{1-b-c}Co_bX_cO_{2-\alpha}D_\alpha$ $(0.90 \leq a \leq 1.8,\ 0 \leq b \leq 0.5,\ 0 \leq c \leq 0.5,\ 0 < \alpha < 2)$; $Li_aNi_{1-b-c}Mn_bX_cO_{2-\alpha}D_\alpha$ $(0.90 \leq a \leq 1.8,\ 0 \leq b \leq 0.5,\ 0 \leq c \leq 0.5,\ 0 < \alpha < 2)$; $Li_aNi_bCo_cL^1_dG_eO_2$ $(0.90 \leq a \leq 1.8,\ 0 \leq b \leq 0.9,\ 0 \leq c \leq 0.5,\ 0 \leq d \leq 0.5,\ 0 \leq e \leq 0.1)$; $Li_aNiG_bO_2$ $(0.90 \leq a \leq 1.8,\ 0.001 \leq b \leq 0.1)$; $Li_aCoG_bO_2$ $(0.90 \leq a \leq 1.8,\ 0.001 \leq b \leq 0.1)$; $Li_aMn_{1-b}G_bO_2$ $(0.90 \leq a \leq 1.8,\ 0.001 \leq b \leq 0.1)$; $Li_aMn_2G_bO_4$ $(0.90 \leq a \leq 1.8,\ 0.001 \leq b \leq 0.1)$; $Li_aMn_{1-g}G_gPO_4$ $(0.90 \leq a \leq 1.8,\ 0 \leq g \leq 0.5)$; $Li_{(3-f)}Fe_2(PO_4)_3$ $(0 \leq f \leq 2)$; and $Li_aFePO_4$ $(0.90 \leq a \leq 1.8)$.

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: $Li_{a1}Ni_{x1}M^1_{y1}M^2_{z1}O_{2-b1}X_{b1}$

In Chemical Formula 11, $0.9 \leq a1 \leq 1.8$, $0.3 \leq x1 \leq 1$, $0 \leq y1 \leq 0.7$, $0 \leq z1 \leq 0.7$, $0.9 \leq x1+y1+z1 \leq 1.1$, and $0 \leq b1 \leq 0.1$, $M^1$ and $M^2$ each independently is or includes one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, $0.6 \leq x1 \leq 1$, $0 \leq y1 \leq 0.4$, and $0 \leq z1 \leq 0.4$, or $0.8 \leq x1 \leq 1$, $0 \leq y1 \leq 0.2$, and $0 \leq z1 \leq 0.2$.

Chemical Formula 12: $Li_{a2}Co_{x2}M^3_{y2}O_{2-b2}X_{b2}$

In Chemical Formula 12, $0.9 \leq a2 \leq 1.8$, $0.7 \leq x2 \leq 1$, $0 \leq y2 \leq 0.3$, $0.9 \leq x2+y2 \leq 1.1$, and $0 \leq b2 \leq 0.1$, $M^3$ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: $Li_{a3}Fe_{x3}M^4_{y3}PO_{4-b3}X_{b3}$

In Chemical Formula 13, $0.9 \leq a3 \leq 1.8$, $0.6 \leq x3 \leq 1$, $0 \leq y3 \leq 0.4$, and $0 \leq b3 \leq 0.1$, $M^4$ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: $Li_{a4}Ni_{x4}Mn_{y4}M^5_{z4}O_{2-b4}X_{b4}$

In Chemical Formula 14, $0.9 \leq a4 \leq 1.8$, $0.8 \leq x4 < 1$, $0 < y4 \leq 0.2$, $0 \leq z4 \leq 0.2$, $0.9 \leq x4+y4+z4 \leq 1.1$, and $0 \leq b4 \leq 0.1$, $M^5$ is or includes one or more of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which the nickel content that is greater than or equal to about 80 mol%, greater than or equal to about 85 mol%, greater than or equal to about 90 mol%, greater than or equal to about 91 %, or greater than or equal to about 94 mol% and less than or equal to about 99 mol%, based on 100 mol% of metal excluding lithium in the lithium transition metal composite oxide. The high-nickel positive electrode active material can achieve high capacity and can be used in high-capacity, high-density rechargeable lithium batteries.

Positive Electrode

The positive electrode for a rechargeable lithium battery may include a current collector, and a positive electrode active material layer on the current collector. The positive electrode active material layer may include a positive electrode active material, and may further include a binder and/or a conductive material.

For example, the positive electrode may further include an additive that can constitute a sacrificial positive electrode.

A content of the positive electrode active material may be in a range of $\geq 90$ wt% to $\leq 99.5$ wt% based on 100 wt% of the positive electrode active material layer, and the content of each of the binder and the conductive material may be in a range of $\geq 0.5$ wt% to $\leq 5$ wt% based on 100 wt% of the positive electrode active material layer.

The binder improves binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be used as a conductive material unless the electrically conductive material causes an adverse chemical change in the battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x \leq 2$), a Si-Q alloy (wherein Q is or includes an element such as at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, $SnO_2$, a Sn-based alloy, or a combination thereof.

The silicon-carbon composite may be or include a composite of silicon and amorphous carbon. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

Negative Electrode

A negative electrode for a rechargeable lithium battery includes a current collector and a negative electrode active material layer on the current collector. The negative electrode active material layer includes a negative electrode active material, and may further include a binder and/or a conductive material.

For example, the negative electrode active material layer may include $\geq 90$ wt% to $\leq 99$ wt% of the negative electrode active material, $\geq 0.5$ wt% to $\leq 5$ wt% of the binder, and $\geq 0.5$ wt% to $\leq 5$ wt% of the conductive material.

The binder adheres the negative electrode active material particles to each other, and adheres the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes a chemical change in the battery. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless-steel foil, a titanium foil, a nickel foam, a copper foam, a polymer substrate coated with a conductive metal, and a combination thereof.

Electrolyte Solution

An electrolyte solution for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone, or in a mixture of two or more types of solvents.

For example, when using a carbonate-based solvent, a cyclic carbonate and a chain carbonate may be mixed, and the cyclic carbonate and the chain carbonate may be mixed in a volume ratio in a range of about 1:1 to about 1:9.

The electrolyte may further include at least one of vinylethyl carbonate, vinylene carbonate, fluoroethylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, or a combination thereof as an additive.

The lithium salt dissolved in the organic solvent is configured to supply lithium ions in a battery, to enable an operation of a rechargeable lithium battery, and to improve transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

Rechargeable Lithium Battery

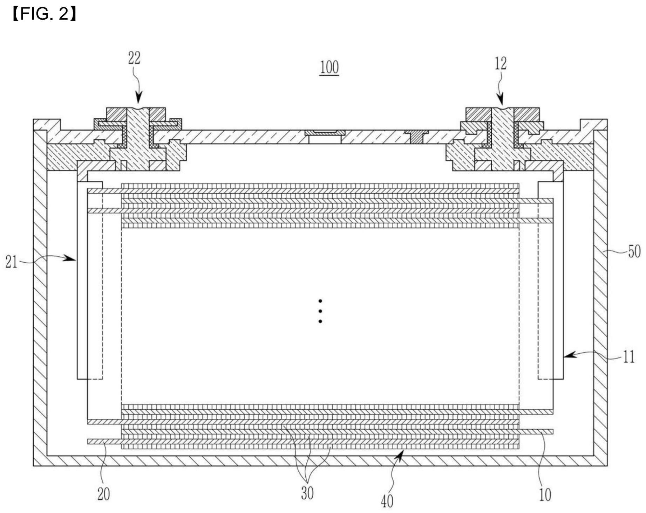

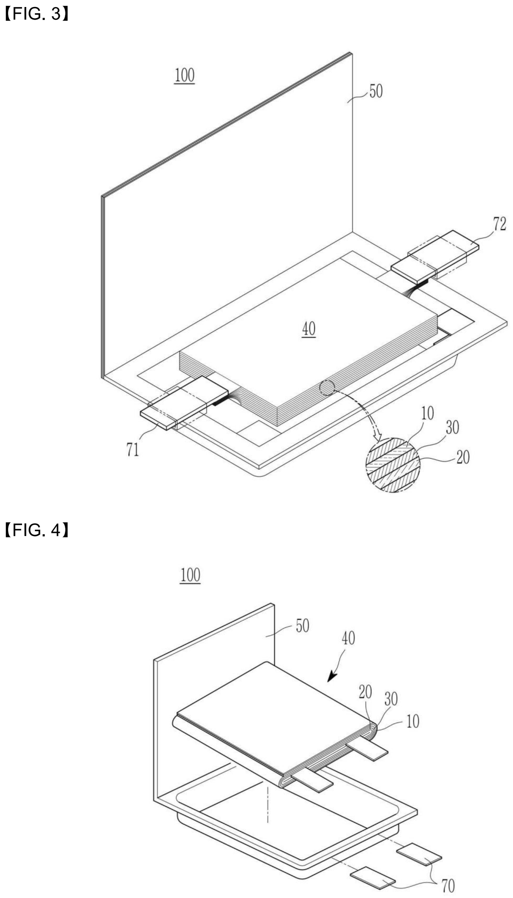

The rechargeable lithium battery may be classified into cylindrical, prismatic, pouch, or coin-type batteries, and the like depending on the shape thereof. FIGS. 1 to 4 are schematic views illustrating the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the battery 100.

The rechargeable lithium battery according to some example embodiments may be applicable to, e.g., automobiles, mobile phones, and/or various types of electrical devices, but the present disclosure is not limited thereto

Examples and comparative examples of the present disclosure are described below. However, the following are only examples of the present disclosure, and the present disclosure is not limited to the following examples.

**Example 1**

(1) Manufacturing of Separator

A boron nitride nanosheet (width*length*thickness = about 200 nm* about 200 nm* about 10 nm) and a polyvinylidene fluoride binder (a weight average molecular weight measured according to a GPC method: 1,000,000 g/mol) were mixed in a weight ratio of 65:35, and the mixture was mounted on an electrospray device (Device name: Electrospinning Machine, Manufacturer: NanoNC) and then, sprayed on one surface of a polyethylene porous substrate (a thickness: 14 $\mu$m) under conditions of a voltage: 15 kV, a flow rate: 0.7 ml/h, and TCD: 15 cm to form a 2 $\mu$m-thick coating

layer, obtaining a separator.

(2) Manufacturing of Rechargeable Lithium Battery Cell

Artificial graphite was used as a negative electrode active material, and the negative electrode active material: a styrene-butadiene rubber binder: carboxylmethyl cellulose were mixed in a weight ratio of 97:1:2, and then dispersed in distilled water to prepare a negative electrode active material slurry. The negative electrode active material slurry was coated on both surfaces of a 10 $\mu$m-thick Cu foil, and then dried at 100 °C and pressed, manufacturing a negative electrode.

A positive electrode slurry was prepared by mixing $LiNi_{0.91}Co_{0.05}Al_{0.04}O_2$ as a positive electrode active material, polyvinylidene fluoride (PVDF) as a binder, and carbon as a conductive agent in a weight ratio of 92:4:4, and then dispersing the mixture into N-methyl-2-pyrrolidone. The positive electrode active material slurry was coated on both surfaces of a 10 $\mu$m-thick aluminum foil and then, dried and pressed to manufacture a positive electrode.

An electrolyte solution was prepared by mixing 1.5 M lithium salt ($LiPF_6$) with a mixed solvent of a carbonate solvent including ethylene carbonate (EC): ethyl methyl carbonate (EMC): dimethyl carbonate (DMC) in a volume ratio of 20:40:40.

The separator was assembled with the positive and negative electrodes to manufacture an electrode assembly, which was housed in a prismatic case, and the electrolyte solution was injected thereinto to manufacture a rechargeable lithium battery cell.

However, the coating layer of the separator was positioned to contact the positive electrode.

**Example 2**

A separator and a rechargeable lithium battery cell of Example 2 were manufactured in the same manner as in Example 1, with a difference that the weight ratio of the boron nitride nanosheet to the polyvinylidene fluoride binder was changed to 60:40.

**Example 3**

A separator and a rechargeable lithium battery cell of Example 3 were manufactured in the same manner as in Example 1, with a difference that the weight ratio of the boron nitride nanosheet to the polyvinylidene fluoride binder was changed to 55:45.

**Example 4**

A separator and a rechargeable lithium battery cell of Example 4 were manufactured in the same manner as in Example 1, with a difference that the weight ratio of the boron nitride nanosheet to the polyvinylidene fluoride binder was changed to 50:50.

**Example 5**

A separator and a rechargeable lithium battery cell of Example 5 were manufactured in the same manner as in Example 1, with a difference that the thickness of the coating layer was changed to 1 $\mu$m.

**Example 6**

A separator and a rechargeable lithium battery cell of Example 6 were manufactured in the same manner as in Example 1, with a difference that the thickness of the coating layer was changed to 1.5 $\mu$m.

**Example 7**

A separator and a rechargeable lithium battery cell of Example 7 were manufactured in the same manner as in Example 1, with a difference that the thickness of the coating layer was changed to 3 $\mu$m.

**Comparative Example 1 (Ref.)**

A separator and a rechargeable lithium battery cell of Comparative Example 1 were manufactured in the same manner as in Example 1, with a difference that the polyethylene porous substrate (a thickness: 18 $\mu$m) itself was used as the separator.

**Comparative Example 2**

A separator and a rechargeable lithium battery cell of Comparative Example 2 were manufactured in the same manner as in Example 1, with a difference that aluminum hydrate (D50: 200 nm) was used instead of the boron nitride nanosheet.

**Comparative Example 3**

A separator and a rechargeable lithium battery cell of Comparative Example 3 were manufactured in the same manner as in Example 1, with a difference that the weight ratio of the boron nitride nanosheet to the polyvinylidene fluoride binder was changed to 70:30.

**Comparative Example 4**

A separator and a rechargeable lithium battery cell of Comparative Example 4 were manufactured in the same manner as in Example 1, with a difference that the weight ratio of the boron nitride nanosheet to the polyvinylidene fluoride binder was changed to 75:25.

**Comparative Example 5**

A separator and a rechargeable lithium battery cell of Comparative Example 5 were manufactured in the same manner as in Example 1, with a difference that the weight ratio of the boron nitride nanosheet to the polyvinylidene fluoride binder was changed to 80:20.

Each of the separators of the examples and the comparative examples were summarized in Tables 1 and 2 below.

Table 1:

|  | Example 1 | Example 2 | Example 3 | Example 4 | Example 5 | Example 6 | Example 7 |
|---|---|---|---|---|---|---|---|
| BNNS:binder (w:w) | 65:35 | 60:40 | 55:45 | 50:50 | 65:35 | 65:35 | 65:35 |
| Coating layer thickness | 2 | 2 | 2 | 2 | 1 | 1.5 | 3 |
| Total thickness of separator | 16 | 16 | 16 | 16 | 15 | 15.5 | 17 |

Table 2:

|  | Comparative Example 1 | Comparative Example 2 | Comparative Example 3 | Comparative Example 4 | Comparativ e Example 5 |
|---|---|---|---|---|---|
| BNNS:binder (w:w) | - | 65:35 | 70:30 | 75:25 | 80:20 |
| Coating layer thickness | - | 2 | 2 | 2 | 2 |
| Total thickness of separator | 18 | 16 | 16 | 16 | 16 |

Referring to Table 1 above, 'BNNS:binder (w:w)' means a weight ratio of the boron nitride nanosheet to the polyvinylidene fluoride binder (however, in Comparative Example 2, a weight ratio of the ceramic to polyvinylidene fluoride binders), 'the coating layer thickness' indicates a thickness per one surface of the coating layer, and the 'total thickness of separator' indicates '(porous substrate thickness)+2*(coating layer thicknesses).'

**Evaluation Example** 1: **Evaluation of Separator**

Each of the separators of the examples and the comparative examples were evaluated in the following method, and the results are shown in Tables 3 and 4 below.
(1) Puncture Strength: The puncture strength was measured by using a KES-G5 device from KATO Tech according to a conventional method known in the art.

(2) Air Permeability: The air permeability was measured by using an EGO1-55-1MR device from Asahi Seiko according to a conventional method known in the art.

(3) Heat Shrinkage: The separators were cut into a size of a width*a length = 5 cm*5 cm to prepare samples. The samples were allowed to stand at 120 °C in an oven for 1 hour to calculate a heat shrinkage rate calculated according to Equation 1 below.

Equation 1:

$$\text{Heat shrinkage rate} = (L_0 - L_1)/L_0 \times 100.$$

$L_0$ is an initial length of the sample and $L_1$ is a length of the sample after leaving the sample at 150 °C for 1 hour

(4) Adhesive Strength: The adhesive strength was tested according to Article 8 of Korean Industrial Standard KS-A-01107 (a testing method of adhesive tapes and adhesive sheets). Each of the separators was cut into a width*a length = 25 cm*25 cm to obtain a test specimen, and a tape (nitto31B) was attached on both surfaces thereof, completing an evaluation specimen. The specimen was compressed by moving a compression roller with a load of 2 kg back and forth at 300 mm/min. After the compression, 30 minutes later, the separator was turned over 180° to peel off one end thereof by about 25 mm, so that the tape 31B adhered to one surface of the separator was fixed to an upper clip of a tensile strength tester, while fixing the other tape 31B adhered onto the other surface of the separator to a lower clip to pull them apart at a tensile speed of 60 mm/min, and thus measure a pressure when the porous adhesive layer was peeled off from the porous substrate. The tensile strength tester was Instron Series IX/s Automated materials Tester-3343.

Table 3:

|  | Example 1 | Example 2 | Example 3 | Example 4 | Example 5 | Example 6 | Example 7 |
|---|---|---|---|---|---|---|---|
| Puncture strength | 633 | 607 | 594 | 579 | 463 | 526 | 648 |
| Air permeability (s/100 cc) | 192 | 188 | 171 | 169 | 148 | 173 | 231 |
| Dry heat shrinkage rate (%) @120 °C, 1hr | 0.4 | 0.5 | 0.7 | 1.5 | 1.6 | 0.6 | 0 |
| Substrate adhesive strength (N/25 mm) | 7 | 7 | 8 | 9 | 7 | 7 | 6 |

Table 4:

|  | Comparative Example 1 | Comparative Example 2 | Comparative Example 3 | Comparative Example 4 | Comparative Example 5 |
|---|---|---|---|---|---|
| Puncture strength | 351 | 624 | 612 | 629 | 638 |
| Air permeability (s/100cc) | 156 | 187 | 241 | 387 | 583 |
| Dry heat shrinkage rate (%) @120°C, 1hr | 5.4 | 1.4 | 4.9 | 4.9 | 5.2 |
| Substrate adhesive strength (N/25 mm) | - | 8 | 5 | 3 | 1 |

Referring to Tables 3 and 4 above, Examples 1 to 7, compared with Comparative Examples 1 to 5, exhibit desired or improved adhesive strength for the electrodes, as well as improved mechanical strength and thermal stability of the separators.

Accordingly, the electrode of some example embodiments, which are represented by Examples 1 to 7, efficiently dissipate heat generated during the operation of rechargeable lithium batteries even at a thin thickness, and during the long-term charging and discharging of the rechargeable lithium batteries, adhesive strength to the electrode was maintained.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

### Description of Symbols:

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. A separator (30) for a rechargeable lithium battery (100), the separator (30) comprising:

   a porous substrate, and
   a coating layer on the porous substrate,
   wherein the coating layer comprises boron nitride (BN) and a binder, and
   an amount of the boron nitride based on a total 100 wt% of the coating layer is less than about 70 wt%.

2. The separator (30) as claimed in claim 1, wherein an amount of the boron nitride based on a total 100 wt% of the coating layer is greater than or equal to about 50 wt% and less than or equal to about 65 wt%.

3. The separator (30) as claimed in claim 1 or 2, wherein the boron nitride has a nanosheet form.

4. The separator (30) as claimed in any one of claims 1 to 3, wherein:

   the boron nitride has a nanosheet form, and said boron nitride nanosheet has a thickness in a range of $\geq t$ 1 nm to $\leq$ 100 nm; and
   at least one of a horizontal length and a vertical length thereof in a range of $\geq$ 1 nm to $\leq$ 1000 nm.

5. The separator (30) as claimed in any one of claims 1 to 4, wherein the binder comprises one of a polyvinylidene fluoride-based polymer and a (meth)acrylic polymer.

6. The separator (30) as claimed in any one of claims 1 to 5, wherein a ratio of the thickness of the porous substrate to the thickness of the coating layer is in a range of about 7:1 to about 6:1.

7. The separator (30) as claimed in any one of claims 1 to 6, wherein a thickness of the coating layer is in a range of $\geq 5\ \mu$m to $\leq 20\ \mu$m.

8. The separator (30) as claimed in any one of claims 1 to 7, wherein the porous substrate comprises at least one of polyolefin, polyester, polyacetal, polyamide, polyimide, polycarbonate, polyetherketone, polyarylether ketone, polyetherimide, polyamideimide, polybenzimidazole, polyethersulfone, polyphenyleneoxide, a cyclic olefin copolymer, polyphenylenesulfide, polyethylenenaphthalate, a glass fiber, **TEFLON** (tetrafluoroethylene), and polytetrafluoroethylene, and a copolymer or mixture of two or more thereof.

9. A rechargeable lithium battery (100), comprising:

   a positive electrode (10);
   a negative electrode (20); and
   a separator (30) is interposed between the positive electrode (21) and the negative electrode (20), the separator (30) comprising the separator (30) as claimed in any one of claims 1 to 8.

10. The rechargeable lithium battery (100) as claimed in claim 9, wherein the rechargeable lithium battery (100) further comprises an electrolyte solution.

【FIG. 1】

【FIG. 2】

【FIG. 3】

【FIG. 4】

Europäisches
Patentamt

European
Patent Office

Office européen
des brevets

# EUROPEAN SEARCH REPORT

**Application Number**

EP 25 22 3644

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE MORAES ANA C. M. ET AL: "Phase-Inversion Polymer Composite Separators Based on Hexagonal Boron Nitride Nanosheets for High-Temperature Lithium-Ion Batteries", ACS APPLIED MATERIALS & INTERFACES, vol. 12, no. 7, 19 February 2020 (2020-02-19), pages 8107-8114, XP055810130, United States ISSN: 1944-8244, DOI: 10.1021/acsami.9b18134 Retrieved from the Internet: URL:https://pubs.acs.org/doi/pdf/10.1021/acsami.9b18134> * Experimental section; page 8107 - page 8109 * ----- | 1-10 | INV. H01M50/491 H01M10/0525 H01M50/417 H01M50/426 H01M50/434 H01M50/446 H01M50/454 H01M50/489 |
| A | KR 2016 0076269 A (HYUNDAI MOTOR CO LTD [KR]) 30 June 2016 (2016-06-30) * claims; examples * ----- | 1-10 | TECHNICAL FIELDS SEARCHED (IPC) H01M |

The present search report has been drawn up for all claims

| Place of search | Date of completion of the search | Examiner |
|---|---|---|
| Munich | 8 May 2026 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 3644

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2026

| Patent document cited in search report | Publication date | Patent family member(s) | Publication date |
|---|---|---|---|
| KR 20160076269 A | 30-06-2016 | NONE | |

For more details about this annex : see Official Journal of the European Patent Office, No. 12/82